# EUROPEAN PATENT SPECIFICATION

(11) **EP 2 034 428 B1**
(45) Date of publication and mention of the grant of the patent: **13.12.2017**
(21) Application number: 07017559.1
(22) Date of filing: 07.09.2007
(51) Int. Cl.: G06Q 20/04, G06Q 20/32, G06Q 20/34, G06K 19/077, G07F 7/08, G07F 7/10, H04L 29/06, H04M 1/725, H04W 12/06, H04W 4/00

(54) **NFC capable mobile communication device**
NFC-fähige mobile Kommunikationsvorrichtung
Dispositif de communication mobile capable de NFC

(43) Date of publication of application: 11.03.2009
(73) Proprietor: Vodafone Holding GmbH, 40213 Düsseldorf (DE)
(72) Inventor: Koraichi, Najib, 6333 CT Schimmert (NL); Montaner, Javier, 10-B-50008 Zaragoza (ES); Waters, Patrick, Redlynch Salisbury, SP5 2HN (GB)
(74) Representative: Jostarndt Patentanwalts-AG

(56) References cited:
- EP-A- 1 688 867
- EP-A- 1 801 741
- EP-A- 1 855 229
- WO-A-2007/094624
- US-A1- 2007 145 152

## Description

### Field of the invention

The invention relates to a mobile communication device comprising a mobile terminal, a subscriber identity module connected to the mobile terminal, and comprising NFC components for near field communication including a radio module and a secure element for storing data used in near field communication services, the radio module communicating with the secure element. The invention also relates to an adapter module for use in a mobile communication device, which comprises a mobile terminal and a subscriber identity module connected to the mobile terminal.

### Background of the invention

The near field communication (NFC) technology standardized in ISO 18092 and 21481, ECMA 340, 352 and 356, and ETSI TS 102 190 allows contactless communication between devices over a short distance of about 10 to 20 centimetres. Near field devices or cards use a radio module comprising a NFC controller with a microprocessor and memory and a magnetic loop antenna operating at a frequency of 13.56 MHz. Important applications for NFC are electronic payment and electronic ticketing. Here, a NFC capable device comprises a secure element that communicates with the NFC controller and that is used as an electronic wallet or for storing electronic tickets. Payment or validation of an electronic ticket is made by simply touching the NFC capable device to a NFC reader or by putting the device in sufficiently close distance to the NFC reader. The close proximity between the NFC capable device and the NFC reader is required here to avoid reading out the wrong person or device.

Mobile communication devices, such as, for example, cellular phones or personal data assistants (PDAs), are widely used, and users usually carry their mobile communication device more than any other electronic device at their disposal. Therefore, mobile communication devices are ideal platforms to implement the NFC technology. In doing this, the mobile communication device has to be equipped with a NFC radio module and a secure element.

One solution is the integration of the radio module into the mobile terminal and the embedding of the secure element in the subscriber identity module (SIM), which is inserted in the mobile terminal for enabling mobile communication. The radio module incorporated in the mobile terminal and the secure element embedded in the subscriber identity module may communicate using a dedicated communication protocol, such as the Single Wire Protocol (SWP) currently standardized by the European Telecommunications Standards Institute (ETSI). In particular, the SWP provides a data transfer via the contact C6 of the subscriber identity module, which is unused in the communication between the subscriber identity module and the mobile terminal within the scope of mobile communications standards.

Thus, according to this solution, a mobile user has to replace his existing mobile communication device with a NFC capable mobile terminal and a NFC capable subscriber identity, i.e. a subscriber identity module that supports communication with the radio module of a NFC capable mobile terminal. This involves considerable effort and costs for the mobile user.

EP 1 688 867 A1 describes a dual universal integrated circuit card (UICC) system for a portable device. The system comprises a master integrated circuit (IC) card and a slave IC card, both of which can be inserted into the socket of the portable device for connecting a subscriber identity module to the device. The slave IC card can include a subscriber identity module. The master IC card includes a chip that performs add-on applications, such as mobile banking, mobile stock trading etc. The chip can be connected to an external antenna for near field communication.

### Summary of the Invention

It is an object of the present invention to allow for a more affordable integration of the NFC technology into a mobile communication device, which requires less effort by the mobile user.

According to a first aspect of the invention, a mobile communication device as set forth in claim 1 comprises a mobile terminal, a subscriber identity module (SIM) connected to the mobile terminal, and comprises NFC components for near field communication (NFC) including a radio module and a secure element for storing data used in near field communication services, the radio module communicating with the secure element. An adapter module is connectable to the mobile terminal and to the subscriber identity module, the adapter module in combination with the mobile terminal or the subscriber identity module forming a unit of the mobile communication device including at least one NFC component. The radio module is included in the mobile terminal and the secure element is included in the subscriber identity module. The radio module and the adapter module are adapted to communicate using a first communication protocol. The subscriber identity module is adapted to communicate with the mobile terminal using a second communication protocol. The adapter module is further adapted to convert data messages transmitted from the radio module to the secure element from the first to the second protocol and to convert data messages transmitted from the secure element to the radio module element from the second to the first protocol.

According to a second aspect of the invention, an adapter module as set forth in claim 5 is provided for use in a mobile communication device, which comprises a mobile terminal and a subscriber identity module connected to the mobile terminal. The adapter module is connectable to the mobile terminal and to the subscriber identity module and the adapter module is configured in such a way, that the adapter module in combination with the mobile terminal or the subscriber identity module forms a unit including at least one NFC component, which is selected from the set of NFC components comprising a radio module for near field communication and a secure element for storing data used in near field communication services. The adapter module is configured to connect the radio module included in the mobile terminal and the secure element included in the subscriber identity module. The radio module and the adapter module are adapted to communicate using a first communication protocol, and the subscriber identity module is adapted to communicate with the mobile terminal using a second communication protocol. The adapter module is further adapted to convert data messages transmitted from the radio module to the secure element from the first to the second protocol and to convert data messages transmitted from the secure element to the radio module element from the second to the first protocol.

The invention involves the idea to provide an adapter module, which can be connected to the mobile terminal and the SIM to enable NFC functionality for a mobile communication device that comprise a mobile terminal and a SIM, wherein the SIM is not NFC enabled. In particular, the adapter module may be connected between the SIM and the mobile terminal, so that the SIM is connected to mobile terminal via the adapter module.

The components for enabling the mobile communications device to be used in NFC include a radio module and a secure element connected to the radio module. The radio module may comprise an antenna and a controller connected to the antenna.

In combination with the mobile terminal or with the SIM, the adapter module forms a subassembly of the mobile communication device, which comprises at least one NFC component.
The invention makes it possible to use NFC services by means of a mobile terminal and a SIM, wherein the SIM is not NFC enabled. Thus, the invention avoids that a mobile user has to replace both of his mobile terminal and his SIM for using NFC services.

Within the scope of the invention, the term subscriber identity module refers to a smart card, which can be inserted into a mobile terminal, and which contains the identity of a subscriber to mobile communication services. For example the subscriber identity module may be configured as a SIM card according to the GSM standard (GSM: Global System for Mobile Communications) or as an USIM card according to the UMTS standard (USIM: Universal Subscriber Identity Module; UMTS: Universal Mobile Telecommunications System). The mobile terminal may comprise a radio interface for accessing a mobile communication network and a user interface, such as, for example, a display unit and/or input unit, which can be operated by the mobile user.

In one embodiment of the mobile communication device and the adapter module, at least one NFC component is included in the subscriber identity module.

This NFC component may be the secure element, which may be embedded as an application into the subscriber identity module. Since the subscriber identity module constitutes a secured chip, it already provides the necessary functionality for secure storage of sensitive date used in near field communication services such as, for example, electronic payment or electronic ticketing. However, also the radio module or part of the radio module, particularly the controller, may be included in the subscriber identity module.

At least one NFC component is included in the mobile terminal.

This NFC component is the radio module, particularly the antenna of the radio module, since the antenna can be arranged in the mobile terminal in such a way that radio reception is essentially not affected by interferences due to electric currents in the mobile communication device or shielding. Another example of the mobile communication device and the adapter module provides that at least one NFC component is included in the adapter module.

In this example a NFC component, which is neither included in the existing mobile terminal of the mobile user nor in his existing subscriber identity module can be provided by the adapter module to enable NFC functionality of the mobiles user's mobile communication device.
The radio module and the adapter module communicate using a first communication protocol.
The first communication protocol may be the Single Wire Protocol (SWP), which might become the standard for the data transfer between the secure element embedded in a subscriber identity module and a mobile terminal including a radio module for near field communication. Within the scope of the first protocol, it may be provided that the radio module and the adapter module communicate via a predetermined electric contact element.
The adapter module may connect further electric contact element of the subscriber identity module to the mobile terminal, thereby allowing a communication between the subscriber identity module and the mobile terminal via the adapter module.
The radio module is included in the mobile terminal and the secure element is included in the subscriber identity module, the subscriber identity module being adapted to communicate with the mobile terminal using a second communication protocol, and the adapter module is adapted to convert data messages transmitted from the radio module to the secure element from the first to the second protocol and to convert data messages transmitted from the secure element to the radio module element from the second to the first protocol.

This embodiment has the advantage that a NFC enabled mobile terminal including the radio device can be used together with a secure element embedded into a subscriber identity module that is not NFC enabled, which means that the subscriber identity module does not support communication according to the first communication protocol or via the first electric contact element. Rather, the subscriber identity module does support communication according to a second communication protocol, which may be the communication protocol provided in a mobile communication standard for the communication between the mobile terminal and the subscriber identity module.

Therefore, in this embodiment data messages sent from the radio module to the secure element are transmitted via the adapter module, which converts the data messages from the first to the second communication protocol. Likewise, data messages sent from the secure element to the radio are transmitted via the adapter module, which converts those data messages from the second to the first communication protocol.

This may involve forwarding data messages received from the mobile terminal via an electric contact element dedicated to the communication between the radio module and the secure element to an electric contact element of the subscriber identity module dedicated to the conventional, i.e. not NFC related, communication between the subscriber identity module and the mobile terminal.

Therefore, in a related embodiment of the mobile communication device and the adapter module, the mobile terminal comprises a second electric contact element for connecting the radio module to the secure element, the second electric contact element is contacted by an electric contact element of the adapter module, and the mobile terminal comprises at least one third electric contact element connected to a further electric contact element of the adapter module, the third electric contact element being provided for communication between the subscriber identity module and the mobile terminal.

A fourth electric contact element of the mobile terminal may be a contact element provided for the conventional communication between the mobile terminal and the SIM, which is not related to NFC services.

A further related embodiment of the mobile communication device and the adapter module provides that the adapter module is adapted to forward a data message received from the radio module via the second electric contact element to the secure element via the third electric contact element of the subscriber identity module and that the adapter module is adapted to forward a data message received from the secure element via the third contact element to the radio module via the second contact element.

The aforementioned and other aspects of the invention will also be apparent from and elucidated with reference to the embodiments of the invention described hereinafter making reference to the drawings.

### Brief description of the drawings

Reference will be made by way of example to the accompanying drawings in which
- Fig. 1: is a schematic block diagram of a mobile terminal and a subscriber identity module,
- Fig. 2: is a schematic depiction of the adapter module, which can be connected to the mobile terminal and the subscriber identity module,
- Fig. 3: is a schematic block diagram of an example, in which the adapter module comprises a radio module for near field communication connected to a secure element embedded in the subscriber identity module,
- Fig. 4: is a schematic block diagram of an embodiment of the invention, in which the adapter module connects a radio module for near field communication included in the mobile terminal connected with a secure element embedded in the subscriber identity module,
- Fig. 5: is a schematic block diagram of another example, in which the mobile terminal comprises a radio module for near field communication that is connected to a secure element included in the adapter module,
- Fig. 6: is a schematic block diagram of a further example, in which the adapter module comprises a radio module for near field communication and a secure element, and
- Fig. 7: is a schematic block diagram of a further example, in which a radio module for near field communication is integrated into the adapter module and a secure element is embedded in the subscriber identity module.

### Detailed description of embodiments of the invention

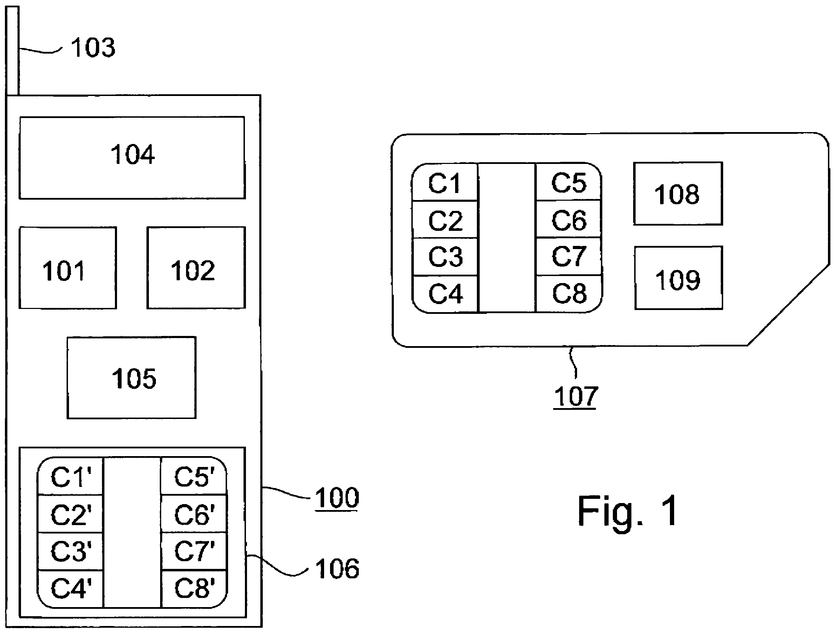

Figure 1 shows a block diagram of a mobile terminal 100 such as, for example, a cellular phone or a personal data assistant (PDA). The mobile terminal 100 comprises a main processor 101 for controlling the operation of the mobile terminal 100. A memory unit 102 is coupled to the main processor 101 for storing data and applications that can be run on the processor. Furthermore, a radio antenna 103 is provided in the mobile terminal 100 for connecting the mobile terminal 100 to a mobile communication network, such as, for example, a GSM network or an UMTS network. Moreover, mobile terminal 100 comprises a display unit 104 and an input unit 105, which can be operated by the user of the mobile terminal 100. The input unit 105 may be configured as a keypad.

Through a card reader unit 106, the mobile terminal 100 can be connected to a subscriber identity module (SIM) 107 to form a mobile communication device. The SIM 107 may be configured as a SIM according to the GSM standard or a USIM according to the UMTS standard. The SIM 107 is a smart card comprising a microprocessor and one or more memory units. It stores preconfigured user-related and network-related data, particularly data identifying the mobile user and data for authenticating the user or his mobile communication device to a mobile communication network. Furthermore, the SIM 107 may be able to store data of the user during operation, such as for example, a phone book or messages received or sent with the mobile communication device. For securely storing the data, the SIM 107 contains one or more applications for storing the data using cryptographic algorithms. Further applications such as, for example, the SIM 107 application Toolkit (STK), enable the SIM 107 to access functions of the mobile terminal 100.

The SIM 107 comprises eight electric contact elements C1,...,C8 on its surface for supplying power to SIM 107 and for reading out data from the SIM 107 and writing data to the SIM 107. According to the specification ISO 7816-2 the contact element C1 is used for the power supply of the SIM 107, the contact element C2 is used for providing a reset signal to the SIM 107, the contact element C3 is used for providing a clock signal to SIM 107, the contact element C5 is the ground terminal and the contact element C7 is an Input/Output terminal for a data exchange between the SIM 107 and another device. The contact elements C4, C6 and C8 are unused according to ISO specification 7816 and according to the mobile communications standards relating to the SIM 107.

The SIM 107 can be inserted into a card receptacle of the mobile terminal 100 that holds the card in a position, in which its contact elements are connected to corresponding contact elements C1',...,C8' of the card reader unit 106 of the mobile terminal 100. The card receptacle and the card reader unit 106 are usually arranged within a battery compartment of the mobile terminal 100, which is accessible by the mobile user.

Since, the contact elements C4, C6 and C8 are not used in mobile communication applications the contact elements C4', C6' and C8' of the card reader unit 106 of a conventional mobile terminal 100 may be blind, or they may even not be present (what is not assumed in the following). Via the card reader unit 106 the SIM 107 and the mobile terminal 100 communicate using communication protocols specified in ISO 7816-3, in particular the T = 0 protocol. These communication protocols are referred to as ISO protocols hereinafter.

Within the scope of the invention, the SIM 107 is not connected directly to the mobile terminal 100 or its card reader unit 106, but via an adapter module 200. In one embodiment, the adapter module 200 comprises first terminals A1,...,A8, which can be connected to the contact elements C1,...,C8 of the SIM 107 and second terminals A1',...,A8' which can be connected to the contact elements C1',...,C8' of the card reader unit 106. The adapter module 200 is capable of forwarding data received from the mobile terminal 100 to the SIM 107 and vice versa. Moreover, data, which is exchanged between the mobile terminal 100 and the SIM 107 via the adapter module 200, can be modified, and the adapter module 200 may be capable of generating data or receiving data from a third source and transmitting this data to the mobile terminal 100 and/or to the SIM 107. For this purpose, the adapter module 200 comprises a controller 201 for running one or more applications. Power is supplied to the adapter module 200 by the mobile terminal 100 using the terminal A1', which is connected to the contact element C1' that also supplies the SIM 107 with power. The terminal A5', which is connected to the ground contact element C5' of the mobile terminal 100, acts as a ground terminal of the adapter module 200.

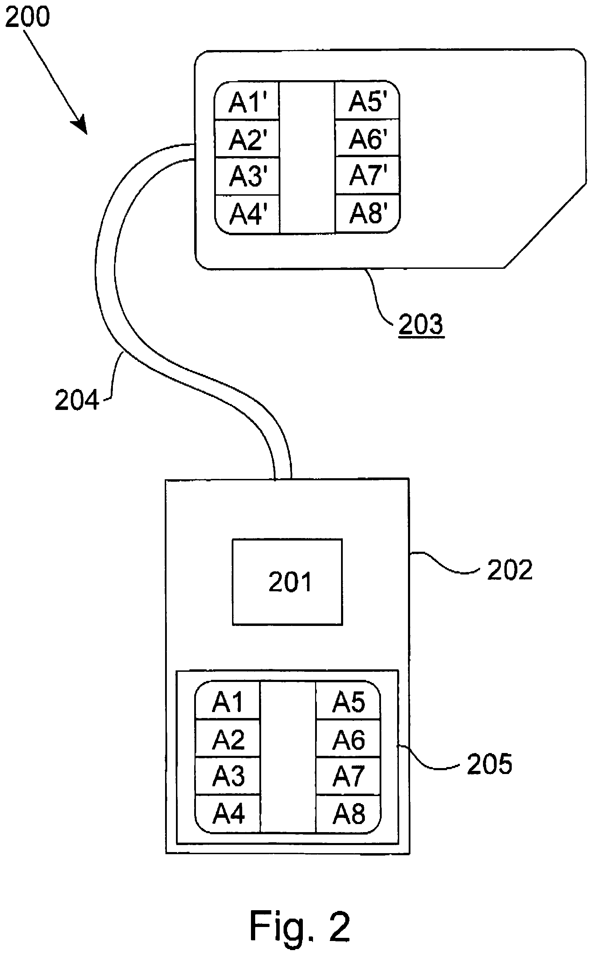

One exemplary embodiment of the adapter module 200 is schematically depicted in Figure 2. In this embodiment, the adapter module 200 comprises a contacting element 203 having essentially the same shape and thickness as the 7SIM 107. The contacting element 203 comprises electric contact elements, which are arranged in the same way as the electric contact elements C1,...,C8 of the SIM 107 and correspond to the terminals A1',...,A8' of the adapter module 200. Thus, the contacting element 203 can be inserted into the card receptacle of the mobile terminal 100 in such a way that the terminals A1',...,A8' are electrically connected to the contact elements C1',...,C8' of the card reader unit 106 of the mobile terminal 100. The contacting element 203 is connected to a circuit board 202 via one ore more flexible wires 204.

The circuit board 202 comprises the microcontroller 201 of the adapter module 200 and a card reader unit 205 for connecting the adapter module 200 to the SIM 107. A card receptacle is mounted on the circuit board 202, which receives the SIM 107 and holds it in the position, in which its contact elements C1,...,C8 are brought in to contact with contact elements of the card reader unit 205 that correspond to the terminals A1,...,A8 of the adapter module 200. The circuit board 202 may be thin enough to place it into the battery compartment of the mobile communication device 100 together with the battery, while the contacting element 203 is inserted into the card receptacle of the mobile terminal 100. Thus, the adapter module 200 can be inserted into a customary mobile terminal 100. An adapter module 200 configured according to this embodiment is named "Turbo Adapter" and distributed by Bladox, s.r.o of the Czech Republic.

In another embodiment, a contacting element of the adapter module 200 comprises a substrate that is thin enough to be inserted into the card receptacle of the mobile terminal 100 together with the SIM 107. On one surface, the substrate comprises contact elements that correspond to the terminals A1',...,A8' of the adapter module 200 and on the opposite surface it comprises contact elements corresponding to the terminals A1,...,A8 of the adapter module 200. The contact elements are arranged on both surfaces in the same way as they are arranged on the surface of the SIM 107, and they are connected to a circuit board comprising the microcontroller of the adapter module 200 by flexible wires. In this embodiment, the contacting element of the adapter module 200 can be inserted into the card receptacle of the mobile terminal 100 in such a way that it is located between the card reader unit 106 and the SIM 107 and that the contacting elements corresponding to the terminals A1,...,A8 contact the contact elements C1,...,C8 of the SIM 107, while the contact elements corresponding to the terminals A1',...,A8' contact the contact elements C1',...,C8' of the card reader unit 106 of the mobile terminal 100. As in the embodiment described before, the circuit board 202 may be thin enough to place it into the battery compartment of the mobile terminal 100 together with the battery.

For using a mobile communication device for near field communication, it has to be equipped with a NFC radio module 300 comprising a NFC controller 301 connected to an antenna 302. The antenna 302 is a magnetic loop antenna that operates at a frequency of 13.56 MHz. For certain NFC applications such as, for example, electronic payment or electronic ticketing, the NFC controller 301 is connected to a secure element 303, which securely stores sensitive data for use in NFC services. Such data may comprise funds for electronic payment, electronic tickets or information for authenticating the mobile user such as, for example, a Personal Identification Number (PIN). Moreover, the secure element 303 may be able to authenticate a NFC reader unit, such as, for example, a point of service for electronic payment or for checking an electronic ticket.

When implementing the NFC technology in a mobile communications device, the secure element 303 may be embedded in the SIM 107, which already contains a microprocessor and a memory unit for securely storing data. Here, the secure element 303 is embedded in the SIM 107 as a further application, which particularly uses the cryptographic algorithms implemented in the SIM 107 for storing the sensitive data related to NFC services. Moreover, applications already implemented in the SIM 107 such as, for example, the STK, can be used to access functions of the mobile terminal 100 within the scope of the NFC services. For example, such applications can access the display unit 104 and/or the input unit 105 of the mobile terminal 100 to provide a user interface for performing NFC services.

The radio module 300 for near field communication may be integrated into the mobile terminal 100.

For the communication between the radio module 300 in the mobile terminal 100 and the secure element 303 embedded in the SIM 107, a dedicated communication mechanism may be provided. One solution is the Single Wire Protocol (SWP), which is being standardized by the European Telecommunications Standards Institute (ETSI). The SWP allows a bidirectional communication using a single terminal. This terminal may be the contact element C6, which is unused within the scope of the ISO protocols and the mobile communication standards. Therefore, in order to enable NFC functionality in a mobile communication device, a SIM 107, which is used in connection with a mobile terminal 100 comprising a radio module 300, must particularly support communication with the mobile terminal 100 according to the SWP using the contact element C6.
A SIM 107, which does support such a communication is referred to a as NFC enabled SIM 107 hereinafter, while a mobile terminal 100 comprising a radio module 300 for near field communication is referred to as NFC enabled mobile terminal 100 hereinafter.

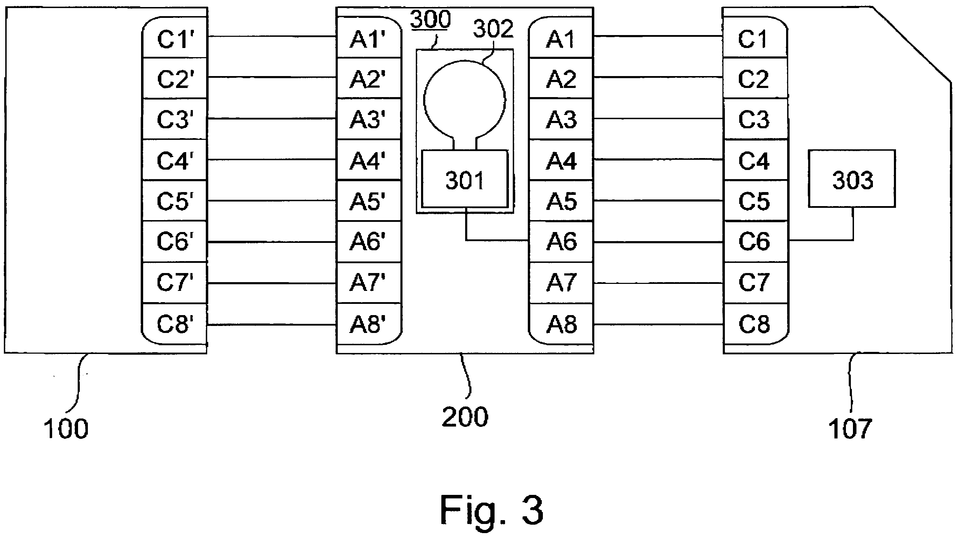

The adapter module 200 makes it possible, to enable NFC functionality in a mobile communication device comprising a mobile terminal 100 and/or a SIM 107, which are not NFC enabled. Hereinafter, examples are described with reference to figures 3-7. These figures give a schematic illustration of the embodiments, in which only components are depicted, which are directly related to NFC functionality.
In Figure 3, it is assumed that the SIM 107 is NFC enabled, while the mobile terminal 100 is not NFC enabled. This means, that the SIM 107 comprises the secure element 303 and supports communication between the secure element 303 and the radio module 300 via its contact element C6 using the SWP, while the handset 100 does not contain any component for NFC.

The adapter module 300 is provided with the radio module 300, which may be integrated into the circuit board 202 of the adapter module 200 in addition to the microcontroller 201. Moreover, the adapter module 200 is configured to support a data exchange between the radio module 300 and the secure element 303 embedded in the SIM 107 via the terminal A6, which is connected to the terminal C6 of the SIM 107, when the adapter module 200 is inserted into the mobile terminal 100 together with the SIM 107. Furthermore, the adapter module 200 is configured in such a way that the SWP is used for the data transfer between the radio module 300 included in the adapter module 200 and the secure element of the SIM 107.
The contact elements C1,...,C5, C7 and C8 of the SIM 107 are connected to the corresponding contact elements C1',...,C5', C7' and C8' of the card reader unit 106 of the mobile terminal 100 via the adapter module 200. Thus, data exchanged between the mobile terminal 100 and the SIM 107 according the ISO or the mobile communications standards is transferred via the adapter module 200 from the mobile terminal 100 to the SIM 107 and from the SIM 107 to the mobile terminal 100. Here, the adapter module 200 is adapted to act as an essentially passive device with respect to this communication between the mobile terminal 100 and the SIM 107. Hence, the "normal" operation, i.e. the operation not related to the NFC functionality, is not affected by the adapter module 200.

Moreover, the secure element 303 embedded in the SIM 107 may use contact elements for communication according to the ISO protocols, particularly the Input/Output contact element C7, to access the display unit 104 and/or the input unit 105 of the mobile terminal 100. Thus, the secure element 303 can provide information to the mobile user on the display unit 104 and/or can receive inputs of the mobile user. For accessing the display unit 104 and/or the input unit 105 standard STK applications may be used.

Thus, in this example, the adapter module 200 emulates the NFC functionality of a NFC-enabled mobile terminal 100 without affecting the "normal" interaction between the mobile terminal 100 and SIM 107, i.e. the interaction not related to NFC. The NFC enabled SIM 107 interacts with the adapter module 200 via its contact C6 in the same way as it would interact with a NFC enabled mobile terminal 100 using the SWP.

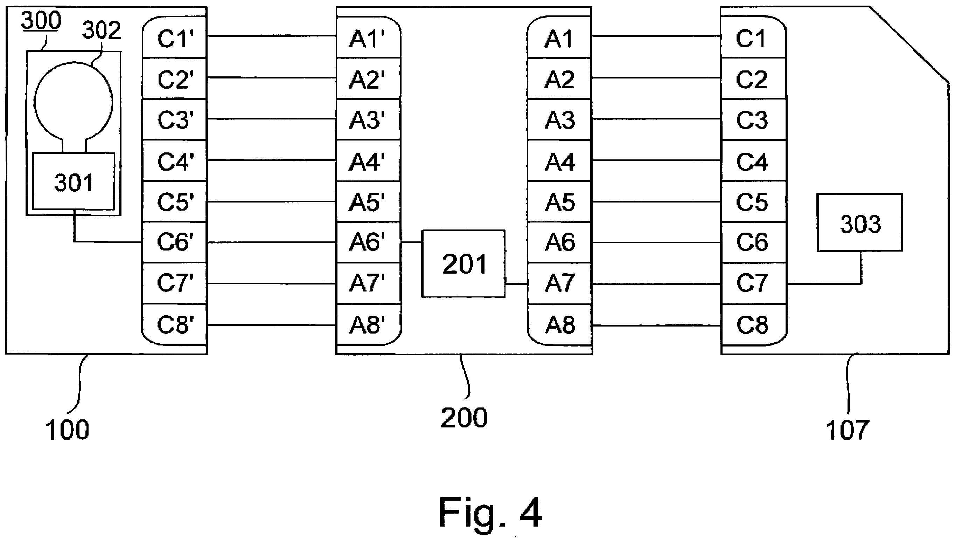

In Figure 4, it is assumed that the mobile terminal 100 is NFC enabled, while the SIM 107 is not NFC enabled. Hence, in this embodiment, the mobile terminal 100 comprises a radio module 300 for near field communication, while the SIM 107 is a conventional SIM 107, which particularly does not support a data exchange via the contact element C6 using the SWP. However, the NFC enabled mobile terminal 100 does support a data exchange via the contact element C6' of the card reader unit 106 using the SWP.
In this embodiment, it is provided that the secure element 303 is embedded into the conventional SIM 107, and data between the radio module 300 included in the mobile terminal 100 and the secure element 303 is exchanged via the adapter module 200, which translates data messages between the SWP supported by the mobile terminal 100 and the ISO protocols supported by the SIM 107. For this purpose, the microcontroller 201 of the adapter module 200 is adapted to convert SWP messages received at the terminal A6' that is connected to the contact C6' of the card reader unit 106 of the mobile terminal 100 into messages according to the ISO protocols supported by the SIM 107. After conversion, these messages are forwarded to the secure element 303 in the SIM 107 via the Input/Output contact element C7 of the SIM 107. Similarly, data messages generated in the secure element 303 of the SIM 107, which are received in the adapter module 200 from the SIM 107 in accordance with the ISO protocols supported by the SIM 107 are converted into messages according to the SWP by the microcontroller 201. After the conversion, these messages are forwarded to the radio module 300 of the mobile terminal 100 via the terminal A6' of the adapter module 200 and the contact element C6' of the card reader unit 106 of the mobile terminal 100.

Hence, in this embodiment, the radio module 300 included in the mobile terminal 100 communicates with the secure element 303, which is embedded in the non NFC enabled SIM 107, in the same way as it would communicate with a secure element 303 embedded in a NFC enabled SIM 107 due to the translation functionality of the adapter module 200.

In addition, during the initialization of the SIM 107, the adapter module 200 sends a signal to the mobile terminal 100 informing the mobile terminal or the radio module 300 included in the mobile terminal 100 that the inserted SIM 107 is NFC-enabled, thereby triggering the mobile terminal 100 to activate NFC functionality.

The contact elements C1,...,C5, C7 and C8 of the SIM 107 are connected to the corresponding contact elements C1',...,C5', C7' and C8' of the card reader unit 106 of the mobile terminal 100 via the adapter module 200. Here, non NFC related data exchanged between the mobile terminal 100 and the SIM 107 according the ISO protocols is transferred via the adapter module 200 from the mobile terminal 100 to the SIM 107 and vice versa. With regard to this data exchange, the adapter module 200 again acts as an essentially passive device, thereby allowing "normal" interaction between the mobile terminal 100 and the SIM 107.

However, NFC related messages, which are transferred between the radio module 300 of the mobile terminal 100 and the secure element 303 of the SIM 107 are transferred via the same interface of the SIM 107, particularly via the contact element C7. When NFC related messages are to be sent to SIM 107 or when those messages are received from the SIM 107, these messages and further messages, which are not related to NFC, are alternately send from the adapter module 200 to the SIM 107 or from the SIM 107 to the adapter module 200. Therefore, when NFC related messages are to be exchanged between the adapter module 200 and the SIM 107, the frequency of the message transfer between the adapter module 200 and the SIM 107 is preferably increased. In particular, this frequency may be duplicated, so that the messages, which are not NFC related, can be exchanged between the mobile terminal 100 and the SIM 107 essentially with the usual frequency.

As in the first example the secure element 303 embedded in the SIM 107 may use contact elements for communication according to the ISO protocols, particularly the Input/Output contact element C7, to access the display unit 104 and/or the input unit 105 of the mobile terminal 100. For the access to the display unit 104 and/or the input unit 105 standard STK applications may be used again.

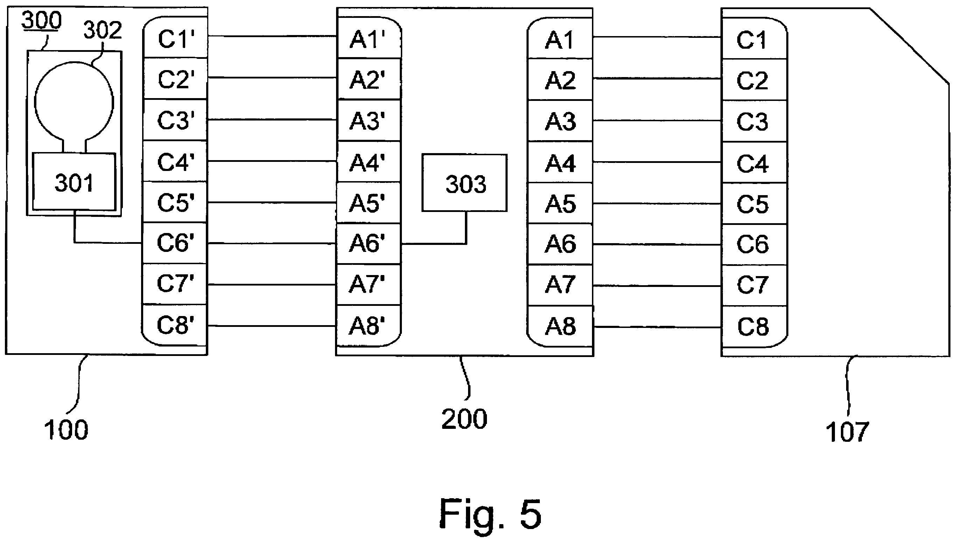

In figure 5, it is likewise assumed that the mobile terminal 100 is NFC-enabled, while the SIM 107 is not NFC enabled. Thus, as in the second embodiment described before, the mobile terminal 100 comprises a radio module 300 for near field communication and supports a data exchange via the contact element C6' of the card reader unit 106 using the SWP, while the SIM 107 is a conventional SIM 107, which particularly does not support a data exchange via the contact element C6 using the SWP.

The secure element 303 is integrated in the adapter module 200. Here, the secure element 303 may be implemented as a secure application run by the microcontroller 201 of the adapter module 200 or it may be integrated into the adapter module 200 as a separate module. The radio module 300 of the mobile terminal 100 communicates with the secure element 303 via the contact element C6' of the mobile terminal's card reader unit 106, which is connected to the terminal A6' of the adapter module 200. The adapter module 200 is configured in such a way that the SWP is used for the data transfer between the radio module 300 included in the adapter module 200 and the secure element of the SIM 107.

The data exchange between the mobile terminal 100 and the SIM 107, which does not relate to the NFC functionality, is carried out via the adapter module 200 in the same way as described in connection above. Thus, the contact elements C1,...,C5, C7 and C8 of the SIM 107 are connected to the corresponding contact elements C1',...,C5', C7' and C8' of the card reader unit 106 of the mobile terminal 100 via the adapter module 200 and non NFC related data exchanged between the mobile terminal 100 and the SIM 107 according the ISO protocols is transferred via the adapter module 200 from the mobile terminal 100 to the SIM 107 and vice versa.

In addition, the adapter module 200 is configured to access the display unit 104 and/or the input unit 105 of the mobile terminal 100, so that the secure element 303 included in the adapter module can provide information to the mobile user on the display unit 104 and/or can receive inputs of the mobile user. For this purpose the adapter module 200 may include STK applications, which are used to access to the display unit 104 and/or the input unit 105.

Thus, the adapter module 200 emulates a NFC enabled SIM 107, and the radio module 300 of the mobile terminal 100 communicates with the secure element 303 of the adapter module 200 in the same way as it would communicate with a NFC enabled SIM 107.

During initialization of the SIM 107 in the mobile terminal 100, the adapter module 200 sends a signal to the mobile terminal 100 or the radio module 300, which informs the mobile terminal 100 or the radio module 300 that inserted SIM 107 is NFC enabled, so that the mobile terminal 100 activates its NFC functionality.

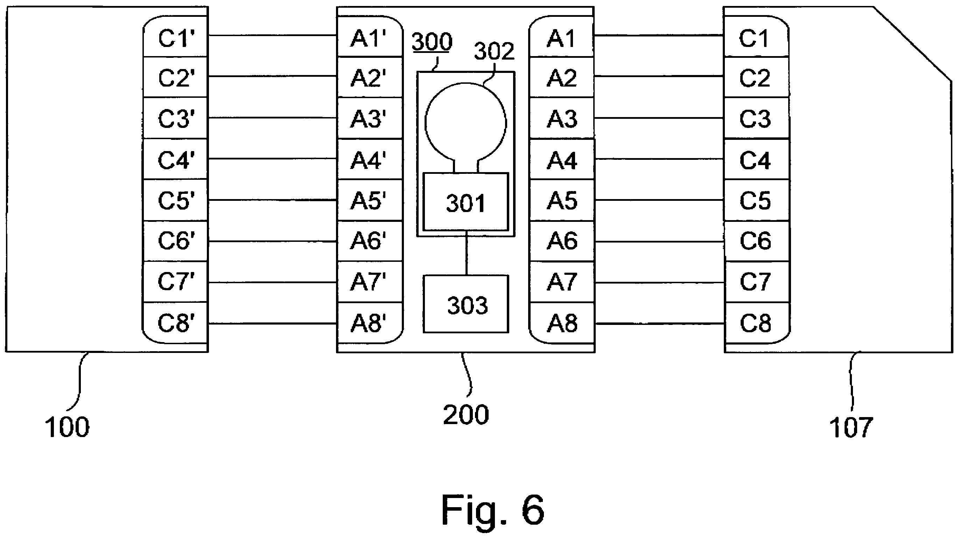

In figure 6, it is assumed that neither the mobile terminal 100 nor the SIM 107 is NFC enabled. In this embodiment, the radio module 300 and the secure element 303 are included in the adapter module 200. The secure element 303 may be implemented as a secure application run by the microcontroller 201 of the adapter module 200 or it may be integrated into the adapter module 200 as a separate module. The radio module 300 and the secure element 303 exchange data within the adapter module 200. Thus, for the communication between the radio module 300 and the secure element 303 any communication protocol may be used. In particularly, the communication between the radio module 300 and the secure element 303 does not have to rely on standardized communications protocols and may be based on a proprietary protocol of the manufacturer of the adapter module 200.

As described above, the contact elements C1,...,C5, C7 and C8 of the SIM 107 are connected to the corresponding contact elements C1',...,C5', C7' and C8' of the card reader unit 106 of the mobile terminal 100 via the adapter module 200. Non NFC related data exchanged between the mobile terminal 100 and the SIM 107 according the ISO protocols is transferred via the adapter module 200 from the mobile terminal 100 to the SIM 107 and from the SIM 107 to the mobile terminal 100.

The adapter module 200 is configured to access the display unit 104 and/or the input unit 105 of the mobile terminal 100, so that the secure element 303 included in the adapter module can provide information to the mobile user on the display unit 104 and/or can receive inputs of the mobile user. For this purpose the adapter module 200 may again include STK applications, which are used to access to the display unit 104 and/or the input unit 105.
Thus, the NFC functionality of the mobile communications device is completely provided by the adapter module 200.

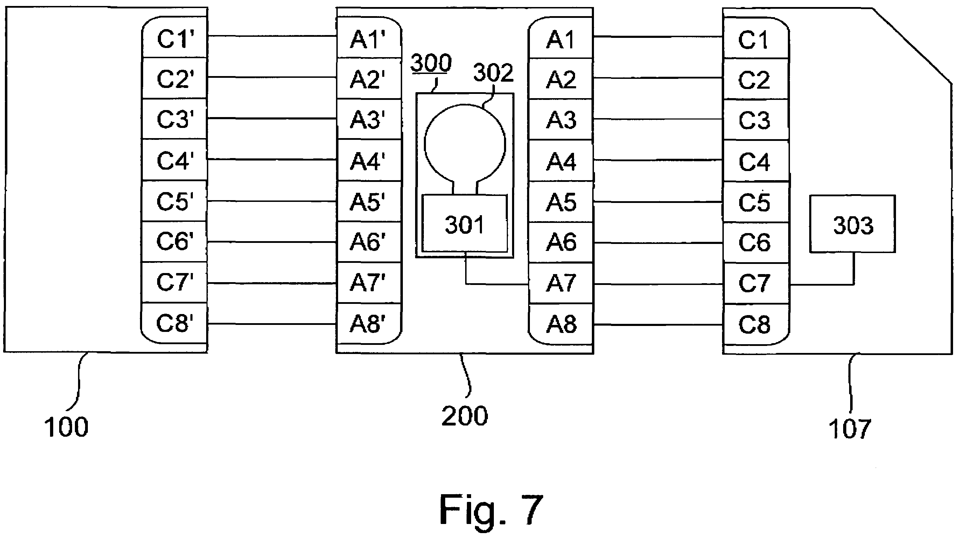

Another example is schematically depicted in figure 7. As described with respect to figure 6, it is assumed that neither the mobile terminal 100 nor the SIM 107 is NFC enabled. In this example, the radio module 300 is integrated into the adapter module 200 and the secure element 303 is embedded as an application in the conventional SIM 107, which does not support a data exchange via the contact element C6' of the card reader unit 106 using the SWP. Thus, the radio module 300 of the adapter module 200 communicates with the secure element 303 embedded in the SIM 107 via the Input/Output terminal C7, using the ISO communication protocols supported by the SIM 107.

The contact elements C1,...,C5, C7 and C8 of the SIM 107 are connected to the corresponding contact elements C1',...,C5', C7' and C8' of the card reader unit 106 of the mobile terminal 100 via the adapter module 200. Non NFC related data exchanged between the mobile terminal 100 and the SIM 107 according the ISO protocols is transferred via the adapter module 200 from the mobile terminal 100 to the SIM 107 and vice versa, and the adapter module 200 acts as an essentially passive device in connection with data exchange, which is not related to NFC. However, as already described in connection with the second embodiment, the frequency of the message transfer between the adapter module 200 and the SIM 107 is preferably increased, when NFC related messages are to be exchanged between the adapter module 200 and the SIM 107. In particular, this frequency may be duplicated, so that the messages, which are not NFC related, can be exchanged between the mobile terminal 100 and the SIM 107 via the adapter module 200 essentially with the usual frequency.

Moreover, the secure element 303 embedded in the SIM 107 may use contact elements for communication according to the ISO protocols, particularly the Input/Output contact element C7, to access the display unit 104 and/or the input unit 105 of the mobile terminal 100. Thus, the secure element 303 can provide information to the mobile user on the display unit 104 and/or can receive inputs of the mobile user. For accessing the display unit 104 and/or the input unit 105 standard STK applications may be used.

## Claims

1. A mobile communication device comprising a mobile terminal (100), a subscriber identity module (107) connected to the mobile terminal (100), and comprising NFC components for near field communication including a radio module (300) and a secure element (303) for storing data used in near field communication services, the radio module (300) communicating with the secure element, an adapter module (200) being connectable to the mobile terminal (100) and to the subscriber identity module (107), the adapter module (200) in combination with the mobile terminal (100) or the subscriber identity module (107) forming a unit of the mobile communication device including at least one NFC component,
**characterized in that** the radio module (300) is included in the mobile terminal (100) and the secure element (303) is included in the subscriber identity module (107), wherein the radio module (300) and the adapter module (200) are adapted to communicate using a first communication protocol,
the subscriber identity module (107) being adapted to communicate with the mobile terminal (100) using a second communication protocol, and
**in that** the adapter module (200) is adapted to convert data messages transmitted from the radio module (300) to the secure element (303) from the first to the second protocol and to convert data messages transmitted from the secure element (303) to the radio module (300) element from the second to the first protocol.

2. The mobile communication device according to claim 1, wherein the first communication protocol is the Single Wire Protocol.

3. The mobile communication device according to claim 1, wherein the mobile terminal comprises a second electric contact element (C6') for connecting the radio module (300) to the secure element (303), the second electric contact element (C6') being contacted by an electric contact element (A6') of the adapter module (200), and wherein the subscriber identity module comprises at least one third electric contact element (C2; C3; C4; C7; C8) connected to a further electric contact element (A2'; A3'; A4'; A7'; A8') of the adapter module (100), the third electric contact element (C2; C3; C4; C7; C8) being provided for communication between the subscriber identity module (107) and the mobile terminal (100).

4. The mobile communication device according to claim 3, wherein the adapter module is adapted to forward a data message received from the radio module (300) via the second electric contact element (C6') to the secure element (303) via the third electric contact element (C2; C3; C4; C7; C8) of the subscriber identity module (107), and wherein the adapter module is adapted to forward a data message received from the secure element (303) via the third contact element (C2; C3; C4; C7; C8) to the radio module (300) via the second electric contact element (C6').

5. An adapter module (200) for use in a mobile communication device, the mobile communication device comprising a mobile terminal (100) and a subscriber identity module (107) connected to the mobile terminal (100), the adapter module (200) being connectable to the mobile terminal (100) and to the subscriber identity module (107) and the adapter module (200) being configured in such a way, that the adapter module (200) in combination with the mobile terminal (100) or the subscriber identity module (107) forms a unit including at least one NFC component, which is selected from the set of NFC components comprising a radio module (300) for near field communication and a secure element (303) for storing data used in near field communication services,
**characterized in that** the adapter module (200) is configured to connect the radio module (300) included in the mobile terminal (100) and the secure element (303) included in the subscriber identity module (107),
wherein the radio module (300) and the adapter module (200) are adapted to communicate using a first communication protocol, and the subscriber identity module (107) is adapted to communicate with the mobile terminal (100) using a second communication protocol, and
**in that** the adapter module (200) is adapted to convert data messages transmitted from the radio module (300) to the secure element (303) from the first to the second protocol and to convert data messages transmitted from the secure element (303) to the radio module (300) element from the second to the first protocol.

## Patentansprüche

1. Mobilkommunikationsvorrichtung, die ein mobiles Endgerät (100), ein Teilnehmeridentifizierungsmodul (107), das mit dem mobilen Endgerät (100) verbunden ist, umfasst und die NFC-Komponenten für die Nahfeldkommunikation, die ein Funkmodul (300) und ein sicheres Element (303) zum Speichern von Daten, die in Nahfeldkommunikationsdiensten verwendet werden, enthalten, umfasst, wobei das Funkmodul (300) mit dem sicheren Element kommuniziert, wobei mit dem mobilen Endgerät (100) und mit dem Teilnehmeridentifizierungsmodul (107) ein Adaptermodul (200) verbunden werden kann, wobei das Adaptermodul (200) zusammen mit dem mobilen Endgerät (100) oder mit dem Teilnehmeridentifizierungsmodul (107) eine Einheit der Mobilkommunikationsvorrichtung, die wenigstens eine NFC-Komponente enthält, bildet,
**dadurch gekennzeichnet, dass** das Funkmodul (300) in dem mobilen Endgerät (100) enthalten ist und dass das sichere Element (303) in dem Teilnehmeridentifizierungsmodul (107) enthalten ist, wobei das Funkmodul (300) und das Adaptermodul (200) dafür ausgelegt sind, unter Verwendung eines ersten Kommunikationsprotokolls zu kommunizieren,
wobei das Teilnehmeridentifizierungsmodul (107) dafür ausgelegt ist, unter Verwendung eines zweiten Kommunikationsprotokolls mit dem mobilen Endgerät (100) zu kommunizieren, und
dass das Adaptermodul (200) dafür ausgelegt ist, Datennachrichten, die von dem Funkmodul (300) an das sichere Element (303) gesendet werden, von dem ersten in das zweite Protokoll umzusetzen und Datennachrichten, die von dem sicheren Element (303) an das Funkmodulelement (300) gesendet werden, von dem zweiten in das erste Protokoll umzusetzen.

2. Mobilkommunikationsvorrichtung nach Anspruch 1, wobei das erste Kommunikationsprotokoll ein Einzeldrahtprotokoll ist.

3. Mobilkommunikationsvorrichtung nach Anspruch 1, wobei das mobile Endgerät ein zweites elektrisches Kontaktelement (C6') zum Verbinden des Funkmoduls (300) mit dem sicheren Element (303) umfasst, wobei das zweite elektrische Kontaktelement (C6') mit einem elektrischen Kontaktelement (A6') des Adaptermoduls (200) in Kontakt steht und wobei das Teilnehmeridentifizierungsmodul wenigstens ein drittes elektrisches Kontaktelement (C2; C3; C4; C7; C8) umfasst, das mit einem weiteren elektrischen Kontaktelement (A2'; A3'; A4'; A7'; A8') des Adaptermoduls (100) verbunden ist, wobei das dritte elektrische Kontaktelement (C2; C3; C4; C7; C8) für die Kommunikation zwischen dem Teilnehmeridentifizierungsmodul (107) und dem mobilen Endgerät (100) vorgesehen ist.

4. Mobilkommunikationsvorrichtung nach Anspruch 3, wobei das Adaptermodul dafür ausgelegt ist, eine von dem Funkmodul (300) über das zweite elektrische Kontaktelement (C6') empfangene Datennachricht über das dritte elektrische Kontaktelement (C2; C3; C4; C7; C8) des Teilnehmeridentifizierungsmoduls (107) an das sichere Element (303) weiterzuleiten, und wobei das Adaptermodul dafür ausgelegt ist, eine von dem sicheren Element (303) über das dritte Kontaktelement (C2; C3; C4; C7; C8) empfangene Datennachricht über das zweite elektrische Kontaktelement (C6') an das Funkmodul (300) weiterzuleiten.

5. Adaptermodul (200) zur Verwendung in einer Mobilkommunikationsvorrichtung, wobei die Mobilkommunikationsvorrichtung ein mobiles Endgerät (100) und ein Teilnehmeridentifizierungsmodul (107), das mit dem mobilen Endgerät (100) verbunden ist, umfasst, wobei das Adaptermodul (200) mit dem mobilen Endgerät (100) und mit dem Teilnehmeridentifizierungsmodul (107) verbunden werden kann und wobei das Adaptermodul (200) in der Weise konfiguriert ist, dass das Adaptermodul (200) zusammen mit dem mobilen Endgerät (100) oder mit dem Teilnehmeridentifizierungsmodul (107) eine Einheit bildet, die wenigstens eine NFC-Komponente enthält, die aus dem Satz von NFC-Komponenten ausgewählt ist, der ein Funkmodul (300) für die Nahfeldkommunikation und ein sicheres Element (303) zum Speichern von Daten, die in Nahfeldkommunikationsdiensten verwendet werden, umfasst,
**dadurch gekennzeichnet, dass** das Adaptermodul (200) dafür konfiguriert ist, das in dem mobilen Endgerät (100) enthaltene Funkmodul (300) und das in dem Teilnehmeridentifizierungsmodul (107) enthaltene sichere Element (303) zu verbinden,
wobei das Funkmodul (300) und das Adaptermodul (200) dafür ausgelegt sind, unter Verwendung eines ersten Kommunikationsprotokolls zu kommunizieren, und wobei das Teilnehmeridentifizierungsmodul (107) dafür ausgelegt ist, unter Verwendung eines zweiten Kommunikationsprotokolls mit dem mobilen Endgerät (100) zu kommunizieren, und
dass das Adaptermodul (200) dafür ausgelegt ist, Datennachrichten, die von dem Funkmodul (300) an das sichere Element (303) gesendet werden, von dem ersten in das zweite Protokoll umzusetzen und Datennachrichten, die von dem sicheren Element (303) an das Funkmodulelement (300) gesendet werden, von dem zweiten in das erste Protokoll umzusetzen.

## Revendications

1. Dispositif de communication mobile comprenant un terminal mobile (100), un module d'identité d'abonné (107) connecté au terminal mobile (100), et comprenant des composants CCP pour la communication en champ proche incluant un module radio (300) et un élément sécurisé (303) pour stocker des données utilisées dans des services de communication en champ proche, le module radio (300) communiquant avec l'élément sécurisé, un module adaptateur (200) pouvant être connecté au terminal mobile (100) et au module d'identité d'abonné (107), le module adaptateur (200) en combinaison avec le terminal mobile (100) ou le module d'identité d'abonné (107) formant une unité du dispositif de communication mobile incluant au moins un composant CCP,
**caractérisé en ce que** le module radio (300) est inclus dans le terminal mobile (100) et l'élément sécurisé (303) est inclus dans le module d'identité d'abonné (107), dans lequel le module radio (300) et le module adaptateur (200) sont adaptés à communiquer en utilisant un premier protocole de communication,
le module d'identité d'abonné (107) étant adapté à communiquer avec le terminal mobile (100) en utilisant un second protocole de communication, et **en ce que** le module adaptateur (200) est adapté à convertir des messages de données transmis du module radio (300) à l'élément sécurisé (303) du premier au second protocole et à convertir des messages de données transmis de l'élément sécurisé (303) à l'élément de module radio (300) du second au premier protocole.

2. Dispositif de communication mobile selon la revendication 1, dans lequel le premier protocole de communication est le protocole SWP.

3. Dispositif de communication mobile selon la revendication 1, dans lequel le terminal mobile comprend un deuxième élément de contact électrique (C6') pour connecter le module radio (300) à l'élément sécurisé (303), le deuxième élément de contact électrique (C6') étant amené en contact avec un élément de contact électrique (A6') du module adaptateur (200), et dans lequel le module d'identité d'abonné comprend au moins un troisième élément de contact électrique (C2 ; C3 ; C4 ; C7 ; C8) connecté à un autre élément de contact électrique (A2'; A3'; A4'; A7' ; A8') du module adaptateur (100), le troisième élément de contact électrique (C2 ; C3 ; C4 ; C7 ; C8) étant prévu pour la communication entre le module d'identité d'abonné (107) et le terminal mobile (100).

4. Dispositif de communication mobile selon la revendication 3, dans lequel le module adaptateur est adapté à transférer un message de données reçu du module radio (300) par le biais du deuxième élément de contact électrique (C6') à l'élément sécurisé (303) par le biais du troisième élément de contact électrique (C2 ; C3 ; C4 ; C7 ; C8) du module d'identité d'abonné (107), et dans lequel le module adaptateur est adapté à transférer un message de données reçu de l'élément sécurisé (303) par le biais du troisième élément de contact (C2 ; C3 ; C4 ; C7 ; C8) au module radio (300) par le biais du deuxième élément de contact électrique (C6').

5. Module adaptateur (200) destiné à être utilisé dans un dispositif de communication mobile, le dispositif de communication mobile comprenant un terminal mobile (100) et un module d'identité d'abonné (107) connecté au terminal mobile (100), le module adaptateur (200) pouvant être connecté au terminal mobile (100) et au module d'identité d'abonné (107), et le module adaptateur (200) étant configuré de telle sorte que le module adaptateur (200) en combinaison avec le terminal mobile (100) ou le module d'identité d'abonné (107) forme une unité incluant au moins un composant CCP qui est sélectionné parmi l'ensemble de composants CCP comprenant un module radio (300) pour la communication en champ proche et un élément sécurisé (303) pour stocker des données utilisées dans des services de communication en champ proche,
**caractérisé en ce que** le module adaptateur (200) est configuré pour connecter le module radio (300) inclus dans le terminal mobile (100) et l'élément sécurisé (303) inclus dans le module d'identité d'abonné (107), dans lequel le module radio (300) et le module adaptateur (200) sont adaptés à communiquer en utilisant un premier protocole de communication, et le module d'identité d'abonné (107) est adapté à communiquer avec le terminal mobile (100) en utilisant un second protocole de communication, et
**en ce que** le module adaptateur (200) est adapté à convertir des messages de données transmis du module radio (300) à l'élément sécurisé (303) du premier au second protocole et à convertir des messages de données transmis de l'élément sécurisé (303) à l'élément de module radio (300) du second au premier protocole.
